# EUROPÄISCHE PATENTSCHRIFT

(11) **EP 3 529 326 B1**
(45) Veröffentlichungstag und Bekanntmachung des Hinweises auf die Patenterteilung: **23.09.2020**
(21) Anmeldenummer: 17784305.9
(22) Anmeldetag: 18.10.2017
(51) Int. Cl.: C09D 175/00, C08G 18/00, C08G 18/02

(54) **HARTE BESCHICHTUNGEN MIT HOHER CHEMISCHER UND MECHANISCHER BESTÄNDIGKEIT**
HARD COATINGS HAVING A HIGH CHEMICAL AND MECHANICAL RESISTANCE
REVÊTEMENTS DURS TRÈS RÉSISTANTS AUX PRODUITS CHIMIQUES ET PRÉSENTANT UNE RÉSISTANCE MÉCANIQUE

(30) Priorität: 18.10.2016 EP 16194348; 18.10.2016 EP 16194353; 21.12.2016 EP 16205635
(43) Veröffentlichungstag der Anmeldung: 28.08.2019
(73) Patentinhaber: Covestro Intellectual Property GmbH & Co. KG, 51373 Leverkusen (DE)
(72) Erfinder: ACHTEN, Dirk, 51375 Leverkusen (DE); ALMATO GUITERAS, Maria, 08031 Barcelona (ES); BEUCK, Saskia, 50733 Köln (DE); FELLER, Thomas, 42659 Solingen (DE); GOLLING, Florian, 50676 Köln (DE)
(74) Vertreter: Levpat
(86) Internationale Anmeldenummer: PCT/EP2017/076604
(87) Internationale Veröffentlichungsnummer: WO 2018/073303

(56) Entgegenhaltungen:
- EP-A1- 1 167 412
- EP-A2- 0 496 208
- EP-B1- 2 438 103
- US-A- 6 133 397

## Beschreibung

Die vorliegende Erfindung betrifft Beschichtungen mit hoher Stabilität gegenüber chemischen und mechanischen Einwirkungen. Besagte Beschichtungen sind erhältlich durch die Vernetzung isocyanatreicher Abmischungen

Konventionelle Polyurethanbeschichtungen weisen bereits eine gute chemische und mechanische Beständigkeit auf (Polyurethane: Lacke, Kleb- und Dichtstoffe (Farbe und Lack Edition), 1. April 2007 Ulrich Meier-Westhues; The solventless solution, M. Almató et al., European Coatings Journal Vol. 07/08, 2010).

Wasserbasierte Poyurethandispersionen mit guter chemischer Beständigkeit gegen Mittel, die zur Entfernung von Graffiti eingesetzt werden, sind beschrieben in WO 2009/029512 und in G.N. Manvi et al. (2012), "Isocyanurate based fluorinated polyurethane dispersion for anti-graffiti coatings" Progress in Organic Coatings 75: 139- 146.

WO 2015/166983 beschreibt die Herstellung von Vergussmassen für Leuchtdioden durch die Polymerisierung oligomerer Polyisocyanate. Die dort beschriebenen Polyisocyanuratkunststoffe werden bei wenigstens 60° C gehärtet.

US 6,133,397 beschreibt die Verwendung von oligomeren Polyisocyanaten für die Herstellung von Beschichtungen. Die Härtung erfolgt bei Temperaturen über 48° C. Dies ist in vielen Bereichen, insbesondere wenn größere Bauteile beschichtet werden sollen, nachteilig, da hierfür Öfen in entsprechender Größe erforderlich sind. Weiterhin gibt US 6,133,397 keine Hinweise darauf, wie aus oligomeren Polyisocyanaten hochfeste Beschichtungen erhalten werden können. Insbesondere hat die dieser Anmeldung zugrunde liegende Studie gezeigt, dass die in US 6,133,397 gezeigte Verwendung von Dibutylzinnlaurat als Katalysator die Eigenschaften der Beschichtung verschlechtert.

EP 1 167 412 beschreibt Beschichtungszusammensetzungen mit einem hydroxyfunktionellen Polyacrylate als Binder und (cyclo)aliphatischen Polyisocyanaten als Vernetzern. Das molare Verhältnis von Isocyanat- zu Hydroxylgruppen beträgt maximal 1,2 : 1.

EP 0 496 208 beschreibt zweikomponentige Beschichtungszusammensetzungen mit einem molaren Verhältnis der Isocyanatgruppen des Härters zu den Hydroxylgruppen des Binders von höchstens 1,1 : 1.

Der vorliegenden Erfindung lag die Aufgabe zugrunde, Beschichtungen bereitzustellen, die in ihrer Stabilität gegen chemische oder mechanische Einwirkungen den herkömmlichen hochfesten Polyurethanbeschichtungen überlegen sind. Weiterhin sollten derartige Beschichtungen - anders als die bereits bekannten Polyisocyanuratkunststoffe - bereits bei Raumtemperatur gehärtet werden können.

In einer Ausführungsform betrifft die Erfindung ein Verfahren zur Herstellung von Oberflächenbeschichtungen mit großer Härte und hoher mechanischer und/oder chemischer Beständigkeit umfassend die Verfahrensschritte
a) Bereitstellen einer Polyisocyanatzusammensetzung A), wobei der Isocyanatanteil mindestens 15 Gew.-% beträgt;
b) Auftragen der Polyisocyanatzusammensetzung A) auf eine Oberfläche; und
c) Katalytische Vernetzung der Polyisocyanatzusammensetzung A) in Anwesenheit wenigstens eines Katalysators B);
mit der Maßgabe, dass das aus der Polyisocyanatzusammensetzung A) und dem wenigstens einen Katalysator B) gebildete Reaktionsgemisch höchstens 0,5 Gew.-% an organischen und anorganischen Eisen-, Blei-, Zinn, Bismuth- und Zinkverbindungen enthält,
und das molare Verhältnis von gegenüber Isocyanat reaktiven Gruppen zu Isocyanatgruppen im Reaktionsgemisch zu Beginn des Verfahrensschritts c) höchstens 0,3 : 1 beträgt.

In einer bevorzugten Ausführungsform der vorliegenden Erfindung wird der wenigstens eine Katalysator mit der Polyisocyanatzusammensetzung A) vermischt, bevor diese in Verfahrensschritt b) auf die Oberfläche aufgetragen wird.

Es hat sich zwischenzeitlich aber gezeigt, dass auch dann Beschichtungen mit guten Eigenschaften erhalten werden können, wenn die Polyisocyanatzusammensetzung A) und eine Zusammensetzung, die wenigstens einen Katalysator B) enthält, nacheinander in getrennten Schichten auf die Oberfläche aufgetragen werden. Deswegen werden in einer weiteren bevorzugten Ausführungsform der vorliegenden Erfindung die Polyisocyanatzusammensetzung A) und eine Zusammensetzung enthaltend wenigstens einen Katalysator B) in beliebiger Reihenfolge nacheinander auf die Oberfläche aufgetragen. Die Anwesenheit eines Katalysators B) in der Polyisocyanatzusammensetzung A) vor dem Auftragen auf die Oberfläche in Verfahrensschritt B) ist also nicht erforderlich. Hierbei ist zu beachten, dass dort, wo eine Beschichtung der Oberfläche gewünscht ist, sowohl die Polyisocyanatzusammensetzung A) als auch die Zusammensetzung enthaltend wenigstens einen Katalysator B) aufgetragen werden müssen.

Unabhängig davon, ob der Katalysator B) bereits vor dem Auftragen in der Polyisocyanatzusammensetzung A) enthalten ist oder nicht, bildet die Polyisocyanatzusammensetzung A) in Kombination mit wenigstens einem Katalysator B) ein "Reaktionsgemisch", d.h. das Polyisocyanat A) und wenigstens ein Katalysator B) liegen in räumlicher Nähe so vor, dass der Katalysator B) eine Vernetzung der im Polyisocyanat A) enthaltenen Polyisocyanate bewirken kann.

Wie aus Beispiel 2 (Tabelle 4) ersichtlich führt der Einsatz von organischen oder anorganischen Eisen-, Blei-, Zinn, Bismuth- oder Zinkverbindungen zu Beschichtungen mit geringerer Pendelhärte. Deswegen enthält das Reaktionsgemisch so, wie es zu Beginn der katalytischen Vernetzung in Verfahrensschritt c) vorliegt, höchstens 0,5 Gew.-%, stärker bevorzugt höchstens 0,2 Gew.-%, noch stärker bevorzugt höchstens 0,1 Gew.-% und besonders bevorzugt nur höchstens 0,01 Gew.-% an organischen und anorganischen Eisen-, Blei-, Zinn, Bismuth- und Zinkverbindungen. Die vorgenannten Anteile beziehen sich auf den Feststoffgehalt des zu Beginn des Verfahrensschritts c) vorliegenden Reaktionsgemisches, d.h. das Gewicht des Reaktionsgemisches unter Abzug von Wasser und organischen Lösemitteln.

Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische und/oder aromatische Reste steht.

Aus Polyisocyanaten lassen sich wegen der Mehrfachfunktionalität (≥ 2 Isocyanat-Gruppen) eine Vielzahl von Polymeren (z.B. (z. B. Polyurethane, Polyharnstoffe und Polyisocyanurate) und niedermolekularen Verbindungen (z.B. solche mit Uretdion-, Isocyanurat-, Allophanat-, Biuret-, Iminooxadiazindion- und/oder Oxadiazintrionstruktur) herstellen.

Der Begriff "Polyisocyanate" bezeichnet in dieser Anmeldung monomere und/oder oligomere Polyisocyanate gleichermaßen. Zum Verständnis vieler Aspekte der Erfindung ist es jedoch wichtig, zwischen monomeren Diisocyanaten und oligomeren Polyisocyanaten zu unterscheiden. Wenn in dieser Anmeldung von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylendiisocyanat (HDI) ein "monomeres Diisocyanat", da es zwei Isocyanat-Gruppen enthält und kein Reaktionsprodukt aus mindestens zwei Polyisocyanatmolekülen darstellt:

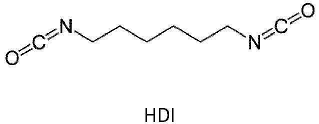

Reaktionsprodukte aus mindestens zwei HDI-Molekülen, die immer noch über mindestens zwei Isocyanat-Gruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Bausteinen aufgebaut sind:

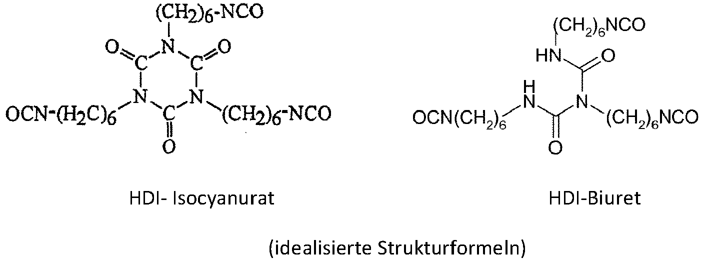

Unter "Polyisocyanatzusammensetzung A)" wird im Sinne der Erfindung die Isocyanatkomponente im anfänglichen Reaktionsgemisch bezeichnet. Anders ausgedrückt handelt es sich dabei um die Summe aller Verbindungen im anfänglichen Reaktionsgemisch, die Isocyanat-Gruppen aufweisen. Die Polyisocyanatzusammensetzung A) wird also als Edukt im erfindungsgemäßen Verfahren eingesetzt. Wenn hier von "Polyisocyanatzusammensetzung A)" insbesondere von "Bereitstellen der Polyisocyanatzusammensetzung A)" die Rede ist, dann bedeutet dies, dass die Polyisocyanatzusammensetzung A) als Edukt existiert und eingesetzt wird.

Erfindungsgemäß beträgt der Gewichtsanteil an Isocyanatgruppen bezogen auf die Gesamtmenge der Polyisocyanatzusammensetzung A) wenigstens 15 Gew.-%.

Grundsätzlich sind monomere und oligomere Polyisocyanate zur Verwendung in der erfindungsgemäßen Polyisocyanatzusammensetzung A) gleichermaßen geeignet. Folglich kann die Polyisocyanatzusammensetzung A) im Wesentlichen aus monomeren Polyisocyanaten oder im Wesentlichen aus oligomeren Polyisocyanaten bestehen. Sie kann aber auch oligomere und monomere Polyisocyanate in beliebigen Mischungsverhältnissen enthalten.

In einer bevorzugten Ausführungsform der Erfindung ist die bei der Trimerisierung als Edukt eingesetzte Polyisocyanatzusammensetzung A) monomerarm (d.h. arm an monomeren Diisocyanaten) und enthält bereits oligomere Polyisocyanate. Die Begriffe "monomerarm" und "arm an monomeren Diisocyanaten" werden hier in Bezug auf die Polyisocyanatzusammensetzung A) synonym verwendet.

Besonders praxisgerechte Ergebnisse stellen sich ein, wenn die Polyisocyanatzusammensetzung A) einen Anteil an monomeren Diisocyanaten in der Polyisocyanatzusammensetzung A) von höchstens 20 Gew.-%, insbesondere höchstens 15 Gew.-% oder höchstens 10 Gew.-%, jeweils bezogen auf das Gewicht der Polyisocyanatzusammensetzung A), aufweist. Vorzugsweise weist die Polyisocyanatzusammensetzung A) einen Gehalt an monomeren Diisocyanaten von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A), auf. Besonders gute Ergebnisse stellen sich ein, wenn die Polymerzusammensetzung A) im Wesentlichen frei von monomeren Diisocyanaten ist. Im Wesentlichen frei bedeutet dabei, dass der Gehalt an monomeren Diisocyanaten höchstens 0,5 Gew.-%, bezogen auf das Gewicht der Polyisocyanatzusammensetzung A), beträgt.

Gemäß einer besonders bevorzugten Ausführungsform der Erfindung besteht die Polyisocyanatzusammensetzung A) vollständig oder zu mindestens 80, 85, 90, 95, 98, 99 oder 99,5 Gew.-%, jeweils bezogen auf das Gewicht der Polyisocyanatzusammensetzung A), aus oligomeren Polyisocyanaten. Hierbei ist ein Gehalt an oligomeren Polyisocyanaten von wenigstens 99 Gew.-% bevorzugt. Dieser Gehalt an oligomeren Polyisocyanaten bezieht sich auf die Polyisocyanatzusammensetzung A), wie sie bereitgestellt wird. D.h. die oligomeren Polyisocyanate werden nicht während des erfindungsgemäßen Verfahrens als Zwischenprodukt gebildet, sondern liegen bereits zu Beginn der Reaktion in der als Edukt eingesetzten Polyisocyanatzusammensetzung A) vor.

Polyisocyanatzusammensetzungen, die monomerarm oder im Wesentlichen frei von monomeren Isocyanaten sind, lassen sich erhalten, indem nach der eigentlichen Modifizierungsreaktion in jedem Fall mindestens ein weiterer Verfahrensschritt zur Abtrennung der nicht umgesetzten überschüssigen monomeren Diisocyanate durchgeführt wird. Diese Monomerenabtrennung kann besonders praxisgerecht nach an sich bekannten Verfahren, vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan, erfolgen.

Gemäß einer bevorzugten Ausführungsform der Erfindung wird die erfindungsgemäße Polyisocyanatzusammensetzung A) durch Modifizierung monomerer Diisocyanate mit anschließender Abtrennung nicht umgesetzter Monomere erhalten.

Gemäß einer besonderen Ausführungsform der Erfindung enthält eine monomerarme Polyisocyanatzusammensetzung A) jedoch ein monomeres Fremddiisocyanat. Hierbei bedeutet "monomeres Fremddiisocyanat", dass es sich von den monomeren Diisocyanaten, die zur Herstellung der in der Polyisocyanatzusammensetzung A) enthaltenen oligomeren Polyisocyanaten verwendet wurden, unterscheidet.

Eine Zugabe von monomerem Fremddiisocyanat kann zur Erzielung spezieller technischer Effekte, wie z.B. einer besonderen Härte vorteilhaft sein. Besonders praxisgerechte Ergebnisse stellen sich ein, wenn die Polyisocyanatzusammensetzung A) einen Anteil an monomeren Fremddiisocyanat in der Polyisocyanatzusammensetzung A) von höchstens 20 Gew.-%, insbesondere höchstens 15 Gew.-% oder höchstens 10 Gew.-%, jeweils bezogen auf das Gewicht der Polyisocyanatzusammensetzung A), aufweist. Vorzugsweise weist die Polyisocyanatzusammensetzung A) einen Gehalt an monomeren Fremddiisocyanat von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A), auf.

Gemäß einer weiteren besonderen Ausführungsform des erfindungsgemäßen Verfahrens enthält die Polyisocyanatzusammensetzung A) monomere Monoisocyanate oder monomere Isocyanate mit einer Isocyanatfunktionalität größer zwei, d.h. mit mehr als zwei Isocyanatgruppen pro Molekül. Die Zugabe von monomeren Monoisocyanaten oder monomeren Isocyanaten mit einer Isocyanatfunktionalität größer zwei hat sich als vorteilhaft erwiesen, um die Netzwerkdichte der Beschichtung zu beeinflussen. Besonders praxisgerechte Ergebnisse stellen sich ein, wenn die Polyisocyanatzusammensetzung A) einen Anteil an monomeren Monoisocyanaten oder monomeren Isocyanaten mit einer Isocyanatfunktionalität größer zwei in der Polyisocyanatzusammensetzung A) von höchstens 20 Gew.-%, insbesondere höchstens 15 Gew.-% oder höchstens 10 Gew.-%, jeweils bezogen auf das Gewicht der Polyisocyanatzusammensetzung A), aufweist. Vorzugsweise weist die Polyisocyanatzusammensetzung A) einen Gehalt an monomeren Monoisocyanaten oder monomeren Isocyanaten mit einer Isocyanatfunktionalität größer zwei von höchstens 5 Gew.-%, vorzugsweise höchstens 2,0 Gew.-%, besonders bevorzugt höchstens 1,0 Gew.-%, jeweils bezogen auf das Gewicht der Polyisocyanatzusammensetzung A), auf. Vorzugsweise wird bei der erfindungsgemäßen Trimerisierungsreaktion kein monomeres Monoisocyanat oder monomeres Isocyanat mit einer Isocyanatfunktionalität größer zwei mitverwendet.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer Ausführungsform der Erfindung weisen die oligomeren Polyisocyanate mindestens eine der folgenden oligomeren Strukturtypen oder deren Gemische auf:

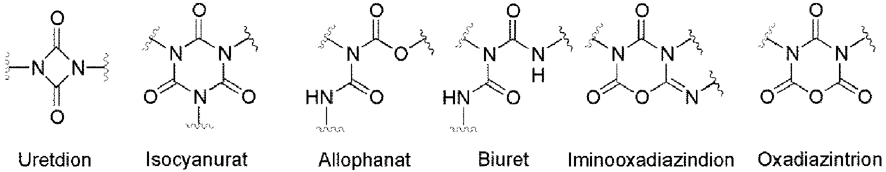

Gemäß einer bevorzugten Ausführungsform der Erfindung wird eine Polymerzusammensetzung A) eingesetzt, deren Isocyanuratstrukturanteil mindestens 50 mol-%, vorzugsweise mindestens 60 mol-%, stärker bevorzugt mindestens 70 mol-%, noch stärker bevorzugt mindestens 80 mol-%, noch stärker bevorzugt mindestens 90 mol-% und besonders bevorzugt mindestens 95 mol-% bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur in der Polyisocyanatzusammensetzung A), beträgt.

Gemäß einer weiteren bevorzugten Ausführungsform der Erfindung wird im erfindungsgemäßen Verfahren eine Polyisocyanatzusammensetzung A), die neben der Isocyanuratstruktur mindestens ein weiteres oligomeres Polyisocyanat mit Uretdion-, Biuret-, Allophanat-, Iminooxadiazindion- und Oxadiazintrionstruktur und Mischungen davon enthält, eingesetzt.

Die Anteile an Uretdion-, Isocyanurat-, Allophanat-, Biuret-, Iminooxadiazindion- und/oder Oxadiazintrionstruktur in den Polyisocyanaten A) können z.B. durch NMR-Spektroskopie bestimmt werden. Bevorzugt lässt sich hierbei die 13C-NMR-Spektroskopie, vorzugsweise protonenentkoppelt, einsetzen, da die genannten oligomeren Strukturen charakteristische Signale liefern.

Unabhängig vom der zugrunde liegenden oligomeren Struktur (Uretdion-, Isocyanurat-, Allophanat-, Biuret-, Iminooxadiazindion- und/oder Oxadiazintrionstruktur) weist die beim erfindungsgemäßen Verfahren einzusetzende oligomere Polyisocyanatzusammensetzung A) und/oder die darin enthaltenen oligomeren Polyisocyanate vorzugsweise eine (mittlere) NCO-Funktionalität von 2,0 bis 5,0, vorzugsweise von 2,3 bis 4,5 auf.

Besonders praxisgerechte Ergebnisse stellen sich ein, wenn die erfindungsgemäß einzusetzende Polyisocyanatzusammensetzung A) einen Gehalt an Isocyanatgruppen von 8,0 bis 28,0 Gew.-%, vorzugsweise von 14,0 bis 25,0 Gew.-%, jeweils bezogen auf das Gewicht der Polyisocyanatzusammensetzung A), aufweist.

Herstellverfahren für die in der Polyisocyanatzusammensetzung A) erfindungsgemäß einzusetzenden oligomeren Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP A 0 339 396 und EP-A 0 798 299 beschrieben.

Gemäß einer zusätzlichen oder alternativen Ausführungsform der Erfindung ist die erfindungsgemäße Polyisocyanatzusammensetzung A) dadurch definiert, dass sie oligomere Polyisocyanate enthält, die aus monomeren Diisocyanaten unabhängig von der Art der verwendeten Modifizierungsreaktion unter Einhaltung eines Oligomerisierungsgrades von 5 bis 45 %, vorzugsweise 10 bis 40 %, besonders bevorzugt 15 bis 30 %, erhalten wurden. Unter "Oligomerisierungsgrad" ist dabei der Prozentsatz der in der Ausgangsmischung ursprünglich vorhandenen Isocyanatgruppen zu verstehen, der während des Herstellprozesses unter Bildung von Uretdion-, Isocyanurat-, Allophanat-, Biuret-, Iminooxadiazindion- und/oder Oxadiazintrionstrukturen verbraucht wird.

Geeignete Polyisocyanate zur Herstellung der beim erfindungsgemäßen Verfahren einzusetzenden Polyisocyanatzusammensetzung A) und der darin enthaltenen monomeren und/oder oligomeren Polyisocyanate sind beliebige, auf verschiedene Weise, beispielsweise durch Phosgenierung in der Flüssig- oder Gasphase oder auf phosgenfreien Weg, wie z.B. durch thermische Urethanspaltung, zugängliche Polyisocyanate. Besonders gute Ergebnisse stellen sich ein, wenn es sich bei den Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-l-methyl-4(3)-isocyanatomethylcyclohexan, 2,4'- und 4,4'-Diisocyanatodicyclohexylmethan(H12MDI), 1,3-und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyl-dicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(iso¬cyanatomethyl)benzol (Xyxlylendiisocyanat; XDI), 1,3- und 1,4-Bis(1-isocyanato-1-methyl¬ethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136.

Geeignete monomere Monoisocyanate, die in der Polyisocyanatzusammensetzung A) gegebenenfalls eingesetzt werden können, sind beispielsweise n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat oder beliebige Gemische solcher Monoisocyanate. Als monomeres Isocyanat mit einer Isocyanatfunktionalität größer zwei, das der Polyisocyanatzusammensetzung A) gegebenenfalls zugesetzt werden kann, sei beispielhaft 4-Isocyanatomethyl-1,8-octandiisocyanat (Triisocyanatononan; TIN) genannt.

Gemäß einer Ausführungsform der Erfindung enthält die Polyisocyanatzusammensetzung A) höchstens 30 Gew.-%, insbesondere höchstens 20 Gew.-%, höchstens 15 Gew.-%, höchstens 10 Gew.-%, höchstens 5 Gew.-% oder höchstens 1 Gew.-%, jeweils bezogen auf das Gewicht der Polyisocyanatzusammensetzung A), an aromatischen Polyisocyanaten. Wie hier verwendet, bedeutet "aromatisches Polyisocyanat" ein Polyisocyanat, welches mindestens eine aromatisch gebundene Isocyanatgruppe aufweist.

Unter aromatisch gebundenen Isocyanat-Gruppen werden Isocyanat-Gruppen verstanden, die an einen aromatischen Kohlenwasserstoffrest gebunden sind.

Gemäß einer bevorzugten Ausführungsform des erfindungsgemäßen Verfahrens wird eine Polyisocyanatzusammensetzung A) eingesetzt, die ausschließlich aliphatisch und/oder cycloaliphatisch gebundene Isocyanat-Gruppen aufweist.

Unter aliphatisch bzw. cycloaliphatisch gebundenen Isocyanat-Gruppen werden Isocyanat-Gruppen verstanden, die an einen aliphatischen bzw. cycloaliphatischen Kohlenwasserstoffrest gebunden sind. Gemäß einer anderen bevorzugten Ausführungsform des erfindungsgemäßen Verfahrens wird eine Polyisocyanatzusammensetzung A) eingesetzt, die aus einem oder mehreren oligomeren Polyisocyanaten besteht oder diese enthält, wobei die ein oder mehreren oligomeren Polyisocyanate ausschließlich aliphatisch und/oder cycloaliphatisch gebundene Isocyanat-Gruppen aufweisen.

Gemäß einer weiteren Ausführungsform der Erfindung besteht die Polyisocyanatzusammensetzung A) zu mindestens 70, 80, 85, 90, 95, 98 oder 99 Gew.-%, jeweils bezogen auf das Gewicht der Polyisocyanatzusammensetzung A), aus Polyisocyanaten, die ausschließlich aliphatisch und/oder cycloaliphatisch gebundene Isocyanat-Gruppen aufweisen. Praktische Versuche haben gezeigt, dass sich besonders gute Ergebnisse mit Polyisocyanatzusammensetzungen A) erzielen lassen, bei denen die darin enthaltenen oligomeren Polyisocyanate ausschließlich aliphatisch und/oder cycloaliphatisch gebundene Isocyanat-Gruppen aufweisen.

Gemäß einer besonders bevorzugten Ausführungsform des erfindungsgemäßen Verfahrens wird eine Polyisocyanatzusammensetzung A) eingesetzt, die aus einem oder mehreren oligomeren Polyisocyanaten besteht oder diese enthält, wobei die ein oder mehreren oligomeren Polyisocyanate auf Basis von 1,4-Diisocyanatobutan (BDI), 1,5-Diisocyanatopentan (PDI), 1,6-Diisocyanatohexan (HDI), Isophorondiisocyanat (IPDI) oder 4,4'-Diisocyanatodicyclohexylmethan (H12MDI) oder deren Mischungen aufgebaut sind.

Gemäß einer weiteren Ausführungsform der Erfindung werden beim erfindungsgemäßen Verfahren Polyisocyanatzusammensetzungen A) mit einer Viskosität größer 500 mPas und geringer 200.000 mPas, vorzugsweise größer 1.000 mPas und geringer 100.000 mPas, besonders bevorzugt größer 1.000 mPas geringer 50.000 mPas, gemessen nach DIN EN ISO 3219 bei 21 °C, eingesetzt.

Da konventionelle Polyurethanbeschichtungen weniger vorteilhafte Eigenschaften aufweisen als die nach dem erfindungsgemäßen Verfahren erhältlichen Beschichtungen, ist die Bildung von Urethangruppen im Rahmen des Verfahrens unerwünscht. Aus diesem Grund werden der Polyisocyanatzusammensetzung A) maximal 50 %, stärker bevorzugt maximal 30 %, noch stärker bevorzugt maximal 20 % und am stärksten bevorzugt maximal 10 % gegenüber Isocyanat reaktive Gruppen zugesetzt. Es ist bevorzugt, dass auch die übrigen Komponenten des zu Beginn des Verfahrensschritts c) vorliegenden Reaktionsgemisches einen Gehalt an gegenüber Isocyanat reaktive Gruppen aufweisen, der niedrig genug ist, dass das gesamte Reaktionsgemisch zu Beginn des Verfahrensschritts c) maximal 50 %, stärker bevorzugt maximal 30 %, noch stärker bevorzugt maximal 20 % und am stärksten bevorzugt maximal 10 % gegenüber Isocyanat reaktive Gruppen enthält. Dies entspricht molaren Verhältnissen im Reaktionsgemisch zu Beginn des Verfahrensschritts c) von gegenüber Isocyanat reaktiven Gruppen zu Isocyanatgruppen von höchstens 0,3 : 1, 0,2 : 1 bzw. 0,1 :1. Die vorgenannten Anteile werden als molares Verhältnis von Isocyanatgruppen zu gegenüber Isocyanat reaktiven Gruppen berechnet. Gegenüber Isocyanat reaktive Gruppen, wie sie in dieser Anmeldung verstanden werden, sind Hydroxylgruppen, Aminogruppen und Thiolgruppen.

Das Auftragen der Polyisocyanatzusammensetzung A) kann nach unterschiedlichen an sich bekannten Methoden erfolgen. Zur Herstellung von Beschichtungen, wie z.B. Lacken, können Reaktionsgemische, die den Katalysator B) und die Polyisocyanatzusammensetzung A) enthalten, beispielsweise durch Spritzen, Streichen, Tauchen, Gießen, Fluten oder mit Hilfe von Pinseln, Walzen oder Rakeln, oder durch Drucktechnologien, bevorzugt Siebdruck, Valvejet oder Piezodruck, in einer oder mehrerer Schichten auf beliebige Untergründe aufgebracht werden. Der Untergrund kann vor der Beschichtung gegebenenfalls auch mit üblichen Grundierungen versehen werden.

Vorzugsweise besteht die zu beschichtende Oberfläche im Wesentlichen aus einem Material ausgewählt aus der Gruppe bestehend aus mineralischen Stoffen, Metall, harten Kunststoffen, flexiblen Kunststoffen, Textilien, Leder, Holz, Holzderivaten und Papier. Stärker bevorzugt besteht die zu beschichtende Oberfläche im Wesentlichen aus einem Material ausgewählt aus der Gruppe bestehend aus Metall, Holz, Glas, Stein, keramische Materialien, Beton, harten Kunststoffe, flexiblen Kunststoffen, Textilien, Leder und Papier.

Eine Oberfläche besteht "im Wesentlichen" aus einem der vorgenannten Materialien, wenn nicht mehr als 50 % der Fläche, bevorzugt nicht mehr als 30 % der Fläche und am stärksten bevorzugt nicht mehr als 20 % der Fläche, die mit der Polyisocyanatzusammensetzung A) in Kontakt kommt aus einem Fremdmaterial besteht.

Es ist weiterhin bevorzugt, die Deckschicht und/oder das Dekorpapier eines Laminatbodens gemäß dem erfindungsgemäßen Verfahren zu beschichten.

Die Polyisocyanatzusammensetzung A) wird vorzugsweise in einer Schichtdicke 1 µm bis 300 µm und stärker bevorzugt von 50 µm bis 100 µm aufgetragen.

Der Begriff "katalytische Vernetzung der Polyisocyanatzusammensetzung A)" bezeichnet die weitere Vernetzung der in der Polyisocyanatzusammensetzung A) vorliegenden oligomeren und gegebenenfalls monomeren Polyisocyanate. Diese erfolgt in Anwesenheit wenigstens eines geeigneten Katalysators B).

Es ist bevorzugt, die Polyisocyanatzusammensetzung A) vor dem Verfahrensschritt b) mit der Katalysatorzusammensetzung B) in Kontakt zu bringen. Da die erfindungsgemäßen oligomeren Polyisocyanate nach dem Mischen mit den erfindungsgemäßen Katalysatorzusammensetzungen Topfzeiten haben, die zwischen 1 Minute und 720 Minuten liegen, werden die beiden Komponenten zweckmäßig erst innerhalb des vorgenannten Zeitraumes vor dem Verfahrensschritt b) miteinander in Kontakt gebracht. Dies erfolgt vorzugsweise durch Mischung der beiden Komponenten und kann mit allen Verfahren und Vorrichtungen geschehen, die für die Anwendung von Zweikomponentensystemen im Bereich der Polyurethanbeschichtungen bekannt sind. Allerdings ist der Auftrag von Polyisocyanatzusammensetzung A) und Katalysatorzusammensetzung B) auch in getrennten Schichten möglich wie oben beschrieben.

Bevorzugt werden die Polyisocyanatzusammensetzung A) und die Katalysatorzusammensetzung B) nicht mehr als 720 Minuten, stärker bevorzugt nicht mehr als 300 Minuten, noch stärker bevorzugt nicht mehr als 60 Minuten und am stärksten bevorzugt nicht mehr als 10 Minuten vor dem Verfahrensschritt b) miteinander in Kontakt gebracht.

In einer bevorzugten Ausführungsform der vorliegenden Erfindung erfolgt die katalytische Vernetzung bei Raumtemperatur. Der Begriff "Raumtemperatur" bezeichnet bevorzugt einen Temperaturbereich zwischen 5 °C und 47 °C, stärker bevorzugt zwischen 10 °C und 35 °C und am stärksten bevorzugt zwischen 15 °C und 25 °C. Bei Verwendung der erfindungsgemäßen Katalysatoren setzt die Vernetzungsreaktion bevorzugt ohne weitere thermische Aktivierung des Katalysators über 47 °C ein.

In einer anderen bevorzugten Ausführungsform der vorliegenden Erfindung erfolgt die katalytische Vernetzung in einem Temperaturbereich zwischen 47 °C und 250 °C, stärker bevorzugt zwischen 80 °C und 200 °C.

In einer bevorzugten Ausführungsform der vorliegenden Erfindung nimmt während der katalytischen Vernetzung in Verfahrensschritt c) die Menge der Isocyanuratgruppen in der Polyisocyanatzusammensetzung A), um wenigstens 10 %, bevorzugt wenigstens 30 %, stärker bevorzugt wenigstens 50 %, noch stärker bevorzugt wenigstens 100 % und am stärksten bevorzugt wenigstens 200 % zu. Der Maßstab ist hier die Menge an Isocyanuratgruppen, die in der in Verfahrensschitt a) bereitgestellten Polyisocyanatzusammensetzung A) vorlag.

Geeignete Katalysatoren B) für das erfindungsgemäß Verfahren sind prinzipiell alle Verbindungen, die die Addition von Isocyanatgruppen zu Isocyanurat-, Uretdion-, Allophanat-, Biuret-, Iminooxadiazindion, Oxadianzintrionstrukturen, Harnstoff und Urethangruppen beschleunigen und dadurch die in der Polyisocyanatzusammensetzung A) enthaltenen isocyanatgruppenhaltigen Moleküle vernetzen. Bevorzugt vernetzen die erfindungsgemäßen Formulierungen unter Ausbildung von Isocyanurat, Uretdion und Harnstoffgruppen.

Geeignete Katalysatoren B) für das erfindungsgemäße Verfahren sind beispielsweise einfache tertiäre Amine, wie z.B. Triethylamin, Tributylamin, N,N-Dimethylanilin, N-Ethylpiperidin oder N, N'-Dimethylpiperazin. Geeignete Katalysatoren sind auch die in der GB 2 221 465 beschriebenen tertiären Hydroxyalkylamine, wie z.B. Triethanolamin, N-Methyl-diethanolamin, Dimethylethanolamin, N-Isopropyldiethanolamin und 1-(2-Hydroxyethyl)pyrrolidin, oder die aus der GB 2 222 161 bekannten, aus Gemischen tertiärer bicyclischer Amine, wie z.B. DBU, mit einfachen niedermolekularen aliphatischen Alkoholen bestehenden Katalysatorsysteme.

Weitere für das erfindungsgemäße Verfahren geeignete Trimerisierungskatalysatoren B sind beispielsweise die aus der DE-A 1 667 309, EP-A 0 013 880 und EP-A 0 047 452 bekannten quaternären Ammoniumhydroxide, wie z.B. Tetraethylammoniumhydroxid, Trimethylbenzylammoniumhydroxid, N,N-Dimethyl-N-dodecyl-N-(2-hydroxyethyl)ammoniumhydroxid, N-(2-Hydroxyehyl)-N,N-dimethylN-(2,2'-dihydroxymethylbutyl)-ammoniumhydroxid und 1-(2-Hydroxyethyl)-1,4-diazabicyclo-[2.2.2]-octanhydroxid (Monoaddukt von Ethylenoxid und Wasser an 1,4-Diazabicyclo-[2.2.2]-octan), die aus EP-A 37 65 oder EP-A 10 589 bekannten quaternären Hydroxyalkylammoniumhydroxide, wie z.B. N,N,N-Trimethyl-N-(2-hydroxyethyl)-ammoniumhydroxid, die aus DE-A 2631733, EP-A 0 671 426, EP-A 1 599 526 und US 4,789,705 bekannten Trialkylhydroxylalkylammoniumcarboxylate, wie z.B. N,N,N-Trimethyl-N-2-hydroxypropylammonium-p-tert.-butylbenzoat und N,N,N-Trimethyl-N-2-hydroxypropylammonium-2-ethylhexanoat, die aus der EP-A 1 229 016 bekannten quartären Benzylammoniumcarboxylate, wie z.B. N-Benzyl-N,N-dimethyl-N-ethylammoniumpivalat, N-Benzyl-N,N-dimethyl-N-ethylammonium-2-ethylhexanoat, N-Benzyl-N,N,N-tributylammonium-2-ethylhexanoat, N,N-Dimethyl-N-ethyl-N-(4-methoxybenzyl)ammonium-2-ethylhexanoat oder N,N,N-Tributyl-N-(4-methoxybenzyl)ammonium-pivalat, die aus der WO 2005/087828 bekannten tetrasubstituierten Ammonium-α-hydroxycarboxylate, wie z.B. Tetramethylammonium-Iactat, die aus der EP-A 0 339 396, EP-A 0 379 914 und EP-A 0 443 167 bekannten quartären Ammonium- oder Phosphoniumfluoride, wie z.B. N-Methyl-N,N,N-trialkylammoniumfluoride mit C8-C10-Alkylresten, N,N,N,N-Tetra-n-butylammoniumfluorid, N,N,N-Trimethyl-N-benzylammonium-fluorid, Tetramethylphosphoniumfluorid, Tetraethylphosphoniumfluorid oder Tetra-n-butylphosphoniumfluorid, die aus der EP-A 0 798 299, EP-A 0 896 009 und EP-A 0 962 455 bekannten quaternären Ammonium- und Phosphoniumpolyfluoride, wie z.B. Benzyl-trimethylammoniumhydrogenpolyfluorid, die aus der EP-A 0 668 271 bekannten Tetraalkylammoniumalkylcarbonate, die durch Umsetzung tertiärer Amine mit Dialkylcarbonaten erhältlich sind, oder betainstrukturierte Quartär-Ammonioalkylcarbonate, die aus der WO 1999/023128 bekannten quaternären Ammoniumhydrogencarbonate, wie z.B. Cholinbicarbonat, die aus der EP 0 102 482 bekannten, aus tertiären Aminen und alkylierend wirkenden Estern von Säuren des Phosphors erhältlichen quartären Ammoniumsalze, wie z.B. Umsetzungsprodukte von Triethylamin, DABCO oder N-Methylmorpholin mit Methanphosphonsäuredimethylester, oder die aus WO 2013/167404 bekannten tetrasubstituierten Ammoniumsalze von Lactamen, wie z.B. Trioctylammoniumcaprolactamat oder Dodecyltrimethylammoniumcaprolactamat.

Als Vernetzungskatalysatoren B) für das erfindungsgemäße Verfahren ebenfalls geeignet ist eine Vielzahl unterschiedlicher Metallverbindungen. Geeignet sind beispielsweise die in der DE-A 3 240 613 als Katalysatoren beschriebenen Oktoate und Naphthenate von Mangan, Cobalt, Nickel, Kupfer, Zirkonium oder Cer oder deren Gemische mit Acetaten von Lithium, Natrium, Kalium, Calcium oder Barium, die aus DE-A 3 219 608 bekannten Natrium- und Kalium-Salze von linearen oder verzweigten Alkancarbonsäuren mit bis zu 10 C-Atomen, wie z.B. von Propionsäure, Buttersäure, Valeriansäure, Capronsäure, Heptansäure, Caprylsäure, Pelargonsäure, Caprinsäure und Undecylsäure, die aus der EP-A 0 100 129 bekannten Alkali- oder Erdalkalimetallsalze von aliphatischen, cycloaliphatischen oder aromatischen Mono- und Polycarbonsäuren mit 2 bis 20 C-Atomen, wie z.B. Natrium- oder Kaliumbenzoat, die aus der GB-PS 1 391 066 und GB-PS 1 386 399 bekannten Alkaliphenolate, wie z.B. Natrium- oder Kaliumphenolat, die aus der GB 809 809 bekannten Alkali- und Erdalkalioxide, - hydroxide, -carbonate, -alkoholate und -phenolate, Alkalimetallsalze von enolisierbaren Verbindungen sowie Metallsalze schwacher aliphatischer bzw. cycloaliphatischer Carbonsäuren, wie z.B. Natriummethoxid, Natriumacetat, Kaliumacetat, Natriumacetoessigester, die aus der EP-A 0 056 158 und EP-A 0 056 159 bekannten, mit Kronenethern oder Polyetheralkoholen komplexierten basischen Alkalimetallverbindungen, wie z.B. komplexierte Natrium- oder Kaliumcarboxylate, das aus der EP-A 0 033 581 bekannte Pyrrolidinon-Kaliumsalz.

Weitere für das erfindungsgemäße Verfahren geeignete Vernetzungskatalysatoren finden sich beispielsweise in J. H. Saunders und K. C. Frisch, Polyurethanes Chemistry and Technology, S. 94 ff (1962) und der dort zitierten Literatur.

Die Katalysatoren B) können sowohl einzeln als auch in Form beliebiger Gemische untereinander im erfindungsgemäßen Verfahren eingesetzt werden.

Bevorzugte Katalysatoren B) sind Metallverbindungen der vorstehend genannten Art, insbesondere Carboxylate und Alkoholate von Alkalimetallen, Erdalkalimetallen oder Zirkonium in Kombination mit Komplexbildnern wie Kronenethern oder Polyethylen- oder Polypropylenglykolen sowie organische Zinnverbindungen der genannten Art.

Besonders bevorzugte Vernetzungskatalysatoren B) sind Natrium- und Kaliumsalze aliphatischer Carbonsäuren mit 2 bis 20 C-Atomen in Kombination mit Komplexbildnern wie Kronenethern oder Polyethylen- oder Polypropylenglykolen sowie aliphatisch substituierte Zinnverbindungen.

Ganz besonders bevorzugte Vernetzungskatalysatoren B) für das erfindungsgemäße Verfahren sind Kaliumacetat in Kombination mit Komplexbildnern wie Kronenethern oder Polyethylen- oder Polypropylenglykolen, Zinnoctoat und/oder Tributylzinnoxid. Die Verwendung von Zinnoctoat und/oder Tributylzinnoxid ist allerdings nur bevorzugt, wenn die Härtung im Temperaturbereich bis höchstens 50 °C erfolgen soll.

In der der vorliegenden Anmeldung zugrunde liegenden Studie wurde überraschend herausgefunden, dass die Verwendung von Zinnverbindungen wie in US 6,133,397 als zusätzliche Katalysatoren beschrieben die Härte der Beschichtung verringert. Deswegen enthält in einer bevorzugten Ausführungsform der vorliegenden Erfindung das Reaktionsgemisch zu Beginn des Verfahrensschritts c) bevorzugt höchstens 0,2 Gew.-%, stärker bevorzugt höchstens 0,1 Gew.-% und noch stärker bevorzugt höchstens 0,01 Gew.-% an organischen oder anorganischen Eisen-, Blei-, Zinn, Bismuth- oder Zinkverbindungen. Diese Angaben beziehen sich auf das Gesamtgewicht des Reaktionsgemisches. Diese Ausführungsform ist insbesondere dann bevorzugt, wenn der Verfahrensschritt c) nicht bei Raumtemperatur, sondern bei erhöhten Temperaturen, vorzugsweise wenigstens 50 °C, stärker bevorzugt wenigstens 80 °C und noch stärker bevorzugt wenigstens 100 °C durchgeführt wird.

Die Metalle in den vorgenannten Verbindungen haben vorzugsweise die jeweils typischen Redoxstufen. Dies sind für Blei II, für Eisen II und III, für Zinn IV, für Bismuth III und für Zink II. Entsprechende Eisenverbindungen sind bevorzugt Eisen(II)-chlorid und Eisen(III)-chlorid. Entsprechende Bismuthverbindungen sind bevorzugt Bismut(III)-laureat, Bismut(III)-2-ethylhexanoat, Bismut(III)-octoat und Bismut(III)-neodecanoat. Entsprechende Zinkverbindungen sind bevorzugt Zinkchlorid und Zink-2-ethylcaproat. Entsprechende Zinnverbindungen sind bevorzugt Zinn(II)-octoat, Zinn(II)-ethylcaproat, Zinn(II)-palmitat, Dibutylzinn(IV)-dilaurat (DBTL) und Dibutylzinn(IV)-dichlorid. Eine entsprechende Bleiverbindung ist bevorzugt Bleioktoat.

In einer stärker bevorzugten Ausführungsform sind die Gehalte des Reaktionsgemisches an den oben genannten organischen und anorganischen Zinn- und Bismuthverbindungen auf die oben genannten Konzentrationen beschränkt. Ganz besonders bevorzugt ist der Gehalt des Reaktionsgemisches an DBTL und Bismut(III)-2-ethylhexanoat auf die oben genannten Konzentrationen beschränkt.

Beim erfindungsgemäßen Verfahren kommt der Vernetzungskatalysator B) im Allgemeinen in einer auf die Menge der eingesetzten Polyisocyanatzusammensetzung A) bezogenen Konzentration von 0,0005 bis 5,0 Gew.-%, bevorzugt von 0,0010 bis 2,0 Gew.-% und besonders bevorzugt von 0,0015 bis 1,0 Gew.-% zum Einsatz.

Die beim erfindungsgemäßen Verfahren zum Einsatz gelangenden Vernetzungskatalysatoren B) sind in den Mengen, die zur Initiierung der Vernetzungsreaktion benötigt werden, in der Regel ausreichend in der Polyisocyanatzusammensetzung A) löslich. Die Zugabe des Katalysators B) zur Polyisocyanatzusammensetzung A) erfolgt daher vorzugsweise in Substanz.

Gegebenenfalls können die Katalysatoren B) zur Verbesserung ihrer Einarbeitbarkeit jedoch auch in einem geeigneten organischen Lösungsmittel gelöst eingesetzt werden. Der Verdünnungsgrad der Katalysatorlösungen kann dabei innerhalb eines sehr breiten Bereichs frei gewählt werden. Katalytisch wirksam sind solche Katalysatorlösungen üblicherweise ab einer Konzentration von etwa 0,01 Gew.-%.

Geeignete Katalysatorlösungsmittel sind beispielsweise gegenüber Isocyanatgruppen inerte Lösungsmittel wie z.B. Hexan, Toluol, Xylol, Chlorbenzol, Essigsäureethylester, Essigsäure-butylester, Diethylenglykoldimethylether, Dipropylenglykoldimethylether, Ethylenglykol-monomethyl- oder - ethyletheracetat, Diethylenglykolethyl- und -butyletheracetat, Propy-lenglykolmonomethyletheracetat, 1-Methoxypropyl-2-acetat, 3- Methoxy-n-butylacetat, Pro-pylenglykoldiacetat, Aceton, Methylethylketon, Methylisobutylketon, Cyclohexanon, Lactone, wie β-Propiolacton, γ-Butyrolacton, ε-Caprolacton und ε-Methylcaprolacton, aber auch Lö¬sungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lö¬sungsmittel.

Sofern beim erfindungsgemäßen Verfahren Katalysatorlösungsmittel zum Einsatz kommen, werden bevorzugt Katalysatorlösungsmittel, die gegenüber Isocyanaten reaktive Gruppen tragen und in den Polyisocyanuratkunststoff eingebaut werden können, verwendet. Beispiele für solche Lösungsmittel sind ein- oder mehrwertige einfache Alkohole, wie z.B. Methanol, Ethanol, n Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z.B. 1 Methoxy-2-propanol, 3-Ethyl-3-hydroxymethyloxetan, Tetrahydrofurfurylalkohol, Ethylenglykol-monomethylether, Ethylenglykolmonoethylether, Ethylenglykolmonobutylether, Diethylen-glykolmonomethylether, Diethylenglykolmonoethylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z.B. Ethylenglykolmonoacetat, Propylen-glykolmonolaurat, Glycerinmono- und diacetat, Glycerinmonobutyrat oder 2,2,4-Trimethyl-1,3-pentandiol-monoisobutyrat; ungesättigte Alkohole wie z.B. Allylalkohol, 1,1-Dimethyl-allylalkohol oder Oleinalkohol; araliphatische Alkohole wie z.B. Benzylalkohol; N-monosubstituierte Amide, wie z.B. N-Methylformamid, N-Methylacetamid, Cyanacetamid oder 2-Pyrrolidinon oder beliebige Gemische derartiger Lösungsmittel.

Die nach dem erfindungsgemäßen Verfahren erhältlichen Beschichtungen zeichnen sich bereits als solche, d. h. ohne Zusatz entsprechender Hilfs-und Zusatzmittel C), durch eine sehr gute Lichtbeständigkeit aus. Dennoch können bei ihrer Herstellung gegebenenfalls übliche Hilfs- und Zusatzmittel C), wie beispielsweise übliche Füllstoffe, Mattierungsmittel, UV-Stabilisatoren, Antioxidantien, Formtrennmittel, Wasserfänger, Slipadditive, Entschäumer, Verlaufsmittel, Rheologieadditive, Flammschutzmittel und/oder Pigmente, mitverwendet werden.

Diese Hilfs- und Zusatzmittel C), ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf die Polyisocyanatzusammensetzung A), in der Beschichtung vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf die Polyisocyanatzusammensetzung A), in der Beschichtung vor.

Das erfindungsgemäße Verfahren wird vorzugsweise, abgesehen von den geringen Mengen gegebenenfalls mitzuverwendender Katalysatorlösungsmittel, lösungsmittelfrei durchgeführt. Zur Verringerung der Verarbeitungsviskosität kann die Polyisocyanatzusammensetzung A) gegebenenfalls aber auch mit organischen Lösungsmitteln verdünnt werden. Hierfür geeignete Lösungsmittel sind beispielsweise die bereits vorstehend beschriebenen, gegenüber Isocyanatgruppen inerten Katalysatorlösungsmittel.

Das erfindungsgemäße Verfahren führt zu hochumgesetzten Polymeren, die dadurch gekennzeichnet sind, dass die Vernetzungsreaktion der in der Polyisocyanatzusammensetzung A) enthaltenen Isocyanate weitestgehend abgeschlossen ist. Als "weitestgehend abgeschlossen" kann im Sinne der vorliegenden Erfindung eine Vernetzungsreaktion angesehen werden, wenn mindestens 80 %, vorzugsweise mindestens 90 %, besonders bevorzugt mindestens 95 % der ursprünglich in der Polyisocyanatzusammensetzung A) vorhandenen freien Isocyanatgruppen abreagiert haben. Anders ausgedrückt sind in der erfindungsgemäßen Beschichtung vorzugsweise nur noch höchstens 20 %, höchstens 10 %, besonders bevorzugt höchstens 5 % der ursprünglich in der Polyisocyanatzusammensetzung A) enthaltenen Isocyanatgruppen vorhanden. Dies kann dadurch erreicht werden, dass im erfindungsgemäßen Verfahren die katalytische Vernetzungmindestens bis zu einem Umsetzungsgrad durchgeführt wird, bei dem nur noch z.B. höchstens 20 % der ursprünglich in der Polyisocyanatzusammensetzung A) enthaltenen Isocyanatgruppen vorhanden sind, so dass ein hochumgesetztes Reaktionsprodukt erhalten wird. Der Prozentsatz an noch vorhandenen Isocyanat-Gruppen kann durch einen Vergleich des Gehalts an Isocyanat-Gruppen in Gew.-% in der ursprünglichen Polyisocyanatzusammensetzung A) mit dem Gehalt an Isocyanat-Gruppen in Gew.-% im Reaktionsprodukt, beispielsweise durch vorgenannten Vergleich der Intensität der Isocyanatbande bei ca. 2270 cm-1 mittels IR-Spektroskopie, bestimmt werden.

Eine nach dem erfindungsgemäßen Verfahren erzeugte Beschichtung hat ausgesprochen vorteilhafte anwendungstechnische Eigenschaften. Insbesondere ihre Härte und ihre mechanische oder chemische Beständigkeit sind größer als dies von konventionellen PU-Beschichtungen bekannt ist. Gleichzeitig kann die Beschichtung, anders als die aus US 6,133,397 und WO 2015/166983 beschriebenen Isocyanuratpolymere bei Raumtemperatur gehärtet werden, ohne dass dabei ihre vorteilhaften Eigenschaften leiden. Insbesondere bei der Beschichtung größerer Werkstücke ist die Härtung bei Raumtemperatur vorteilhaft, da in diesem Fall keine Öfen benötigt werden, die das gesamte Werkstück aufnehmen.

Die Härte einer Beschichtung wird bevorzugt als Pendelhärte nach DIN EN ISO 1522 gemessen.Eine Beschichtung "mit großer Härte" weist vorzugsweise eine Pendelhärte nach König von wenigstens 100 Sekunden, stärker bevorzugt von wenigstens 120 Sekunden, noch stärker bevorzugt von wenigstens 150 Sekunden und am stärksten bevorzugt von wenigstens 180 Sekunden auf.

Die mechanische Beständigkeit einer Beschichtung wird bevorzugt als "nail scratch resistance" oder als Bleistifthärte bestimmt. Zur Bestimmung der "nail scratch resistance" wird mit einem Fingernagel über die Beschichtung gekratzt. Der Zustand der Oberfläche nach dem Kratzen wird bewertet. Die Bestimmung der Bleistifthärte erfolgt bevorzugt nach DIN EN ISO 15184.

Die chemische Beständigkeit wird bestimmt, indem eine Testflüssigkeit, die die zu testende Chemikalie enthält oder aus ihr besteht auf eine beschichtete Oberfläche aufgebracht und mit einer Petrischale abgedeckt wird. Die folgende Inkubation erfolgt bei Raumtemperatur. Nach definierten Zeitabschnitten wird die Beschichtung auf Verfärbung, Entfärbung, Glanzverlust, Schwellung und die Anwesenheit von Blasen untersucht. Eine Beschichtung mit hoher Beständigkeit zeigt die vorgenannten Veränderungen vorzugsweise nur in geringem Ausmaß, stärker bevorzugt ist überhaupt keine Veränderung erkennbar.

Die mit dem erfindungsgemäßen Verfahren erhältlichen Beschichtungen weisen insbesondere eine erhöhte Beständigkeit gegenüber Ethanol, Tinte, verdünnte Natronlauge, Aceton und HS DOT 4 (Bremsflüssigkeit, erhältlich von der ARAL AG, Deutschland) auf. HS DOT 4 ist ein Gemisch unterschiedlicher Polyglykole. Diese Beständigkeit ist vorzugsweise dadurch definiert, dass mit der erfindungsgemäßen Beschichtung versehene Oberflächen auch nach einer Inkubation von 16 Stunden mit den vorgenannten Chemikalien keine sichtbaren Veränderungen aufweisen.

Weiterhin weisen die mit dem erfindungsgemäßen Verfahren erhältlichen Beschichtungen erhältlichen Beschichtungen eine hohe Beständigkeit gegen Reinigungsmittel zur Entfernung von Sprühfarbe auf. Vorzugsweise ist diese Beständigkeit dadurch definiert, dass auch nach 10 Anwendungen eines entsprechenden Reinigungsmittels keine sichtbare Beeinträchtigung der Oberfläche vorliegt.

In einer weiteren Ausführungsform betrifft die vorliegende Erfindung eine Oberflächenbeschichtung, die nach dem oben beschriebenen Verfahren erhältlich ist.

In noch einer weiteren Ausführungsform betrifft die vorliegende Erfindung eine Oberfläche, die mit der oben genannten Oberflächenbeschichtung beschichtet ist.

In einer weiteren Ausführungsform betrifft die vorliegende Erfindung die Verwendung einer Polyisocyanatzusammensetzung A), welche oligomere Polyisocyanate enthält und arm an monomeren Polyisocyanaten ist, in Anwesenheit von höchstens 0,5 Gew.-% an organischen und anorganischen Eisen-, Blei-, Zinn, Bismuth- und Zinkverbindungen im Reaktionsgemisch zur Herstellung von Oberflächenbeschichtungen mit hoher mechanischer und/oder chemischer Beständigkeit, wobei das molare Verhältnis von gegenüber Isocyanat reaktiven Gruppen zu Isocyanatgruppen im Reaktionsgemisch zu Beginn der katalytischen Vernetzung der Polyisocyanatzusammensetzung A höchstens 0,3 : 1 beträgt.

Alle Definitionen die oben für das erfindungsgemäße Verfahren gegeben wurden, sind - wenn nicht anders angegeben - auch für die erfindungsgemäßen Erzeugnisse und Verwendungen anwendbar.
In einem 1. Punkt offenbart die vorliegende Anmeldung ein Verfahren zur Herstellung von Oberflächenbeschichtungen mit großer Härte und hoher mechanischer und/oder chemischer Beständigkeit umfassend die Verfahrensschritte
   a) Bereitstellen einer Polyisocyanatzusammensetzung A), wobei der Isocyanatanteil mindestens 15 Gew.-% beträgt;
   b) Auftragen der Polyisocyanatzusammensetzung A) auf eine Oberfläche; und
   c) Katalytische Vernetzung der Polyisocyanatzusammensetzung A) in Anwesenheit eines Katalysators B).
In einem 2. Punkt offenbart die vorliegende Anmeldung das Verfahren nach Punkt 1, wobei die katalytische Vernetzung bei Raumtemperatur erfolgt.
In einem 3. Punkt offenbart die vorliegende Anmeldung das Verfahren nach Punkt 1 oder 2, wobei der Katalysator ein Metallsalz einer schwachen aliphatischen oder cycloaliphatischer Carbonsäure in Kombination mit einem Kronenether ist.
In einem 4. Punkt offenbart die vorliegende Anmeldung das Verfahren nach einem der Punkte 1 bis 3, wobei die erzeugte Oberflächenbeschichtung eine Pendelhärte nach König von wenigstens 80 Sekunden aufweist.
In einem 5. Punkt offenbart die vorliegende Anmeldung das Verfahren nach einem der Punkte 1 bis 3, wobei die erzeugte Oberflächenbeschichtung eine Pendelhärte nach König von wenigstens 100 Sekunden aufweist.
In einem 6. Punkt offenbart die vorliegende Anmeldung das Verfahren nach einem der Punkte 1 bis 5 wobei die erzeugte Oberflächenbeschichtung eine erhöhte chemische Beständigkeit aufweist.
In einem 7. Punkt offenbart die vorliegende Anmeldung das Verfahren nach einem der Punkte 1 bis 6, wobei die Beschichtung besonders beständig gegen wenigstens eines der Agentien ausgewählt aus der Gruppe bestehend aus Ethanol, Tinte, Natronlauge und HS DOT 4 ist.
In einem 8. Punkt offenbart die vorliegende Anmeldung das Verfahren nach einem der Punkte 1 bis 7, wobei während der katalytischen Vernetzung in Verfahrensschritt c) die Menge der Isocyanuratgruppen in der Polyisocyanatzusammensetzung A),gegenüber der Menge, die in Verfahrensschritt a) vorlag um wenigstens 10 % zunimmt.
In einem 9. Punkt offenbart die vorliegende Anmeldung eine Oberflächenbeschichtung erhältlich nach dem Verfahren gemäß einem der Punkte 1 bis 8.
In einem 10. Punkt offenbart die vorliegende Anmeldung eine Oberfläche beschichtet mit der Oberflächenbeschichtung nach Punkt 9.
In einem 11. Punkt offenbart die vorliegende Anmeldung die Oberfläche gemäß Punkt 10, wobei die Oberfläche ausgewählt ist aus der Gruppe bestehend aus mineralische Stoffen, Metall, harten Kunststoffen, flexiblen Kunststoffen, Textilien, Leder, Holz, Holzderivaten und Papier.
In einem 12. Punkt offenbart die vorliegende Anmeldung die Verwendung einer Polyisocyanatzusammensetzung A), welche oligomere Polyisocyanate enthält und arm an monomeren Polyisocyanaten ist, zur Herstellung von Oberflächenbeschichtungen mit hoher mechanischer und/oder chemischer Beständigkeit.

Die folgenden Ausführungsbeispiele dienen dazu, die Erfindung zu illustrieren. Sie sollen den Schutzbereich der Patentansprüche in keiner Weise beschränken.

### Beispiele

### Beschreibung der Prüfmethoden

**Pendelhärte** analog zum DIN EN ISO 1522:2007-04 die Pendeldämpfungsprüfung ist ein Verfahren zur Bestimmung der viskoelastischen Eigenschaften von Beschichtungen nach DIN EN ISO 1522 in einem Pendeldämpfungs-Gerät und damit ein Maß für deren Härte. Es besteht aus einem Probentisch auf dem ein Pendel frei auf einer Probenoberfläche schwingen kann und einem Zählwerk. Die Anzahl der Schwingungen in einem definierten Winkelbereich ist ein Maß für die Härte einer Beschichtung und wird in Sekunden oder Anzahl der Schwingungen angegeben.

**Abriebbeständigkeit** im Taber Abraser Gerät mit CS10 Reibrollen (mittelhart). Die Lacke werden auf Probekörper aufgetragen. Nach der entsprechenden Härtungszeit wird die Prüfung durchgeführt. Der Probekörper (Substrat mit Beschichtung) wird gewogen und das Ausgangsgewicht ermittelt. Die Anzahl der Reibzyklen, nach denen man das Gewicht der Probekörper und damit den Abrieb wiegt, wird zuvor festgelegt. Der Probekörper wird auf dem Probenhalter befestigt, die Reibrollen und Absaugung aufgesetzt und die Abriebprüfung gestartet. Für die Bestimmung der Abriebwiderstand wird der Gewichtsverlust gemessen. Der Probekörper wird mit festgelegter Anzahl Umdrehungszyklen verkratzt und durch Differenzwägung wird der abgeriebene Anteil der Probe ermittelt.

**Härteprüfung** mit DUR-O-Test: Das Gerät besteht aus einer Hülse, in die eine Spiralfeder eingesetzt ist, die mit Hilfe eines Schiebers verschieden stark gespannt werden kann. Die Feder wirkt auf einen Hartmetallstift (ø 1 mm), dessen Spitze aus der Hülse herausragt. Mit einer Klemmschraube wird der Schieber fixiert und damit die Spannung der Feder konstant gehalten. So kann der Stift mit unterschiedlicher Kraft belastet werden. Drei Druckfedern unterschiedlicher Federkraft decken einen Härtebereich von 0-20 N ab. Die Belastung die eine sichtbare Ritzspur auf dem Film verursacht, wird ermittelt.

### Chemische Beständigkeit

**Lackoberfläche Beständigkeit gegen Prüfsubstanz:** Die ausgehärteten Lackfilme werden auf ihre Widerstandsfähigkeit gegenüber Prüfsubstanzen untersucht (DIN EN ISO 4628-1 bis -5:2016-07). Der Lackfilm befindet sich in der Regel auf einer Glasplatte. Ein kleiner Wattebausch wird mit der Prüfsubstanz getränkt und auf die Lackoberfläche gelegt. Durch Abdecken, z.B. mittels eines Uhrglases oder eines Reagenzglases, wird die Verdunstung der Prüfsubstanz vermieden. Der Wattebausch bzw. der Zellstoff trocknet nicht aus. Nach vorab festgelegter Belastungsdauer wird die mit Prüfsubstanz getränkte Watte entfernt, die belastete Stelle abgetrocknet und sofort beurteilt, um einer Regeneration der Lackoberfläche zuvorzukommen. Man überprüft die Prüffläche visuell und durch Abtasten mit der Hand auf Veränderungen. Anschließend wird beurteilt, ob und welche Veränderungen auf der Prüffläche aufgetreten sind.

Beurteilt werden Erweichung bzw. Verfärbung der Lackoberfläche.
0 = keine Veränderungen feststellbar
1 = nur sichtbare Veränderung
2 = geringe Erweichung / leichte Farbtonveränderung
3 = deutliche Erweichung / mittlere Farbtonveränderung
4 = starke Erweichung / starke Farbtonveränderung
5 = Beschichtung komplett zerstört ohne Fremdeinwirkung / sehr starke Farbtonveränderung

### Antigraffiti Eigenschaften von Oberflächen

Die ausgehärteten Lackfilme werden auf ihre Widerstandsfähigkeit gegenüber Graffiti und den entsprechenden Reinigungsmitteln bewertet. Auf der lackierten Oberfläche wird Lack aus Sprühdose (RAL 4005 Blaulila, RAL 6001 Smaragdgrün, RAL 9005 Schwarz), Edding 3000 Permanent Marker Red und Bremsfüssigkeit HS-DOT 4 appliziert und für 48 Stunden bei 50°C trocken lassen. Nach Abkühlung wird Graffiti remover Tensid AGS 221 darauf gepinselt und nach 5 Minuten Wirkungszeit entfernt. Das Zyklus wird bis auf 10 Mal wiederholt und die Veränderung visuell beurteilt, mit folgenden Einstufungen:
0 = keine Veränderungen feststellbar
1 = nur sichtbare Veränderung
2 = geringe Erweichung / leichte Farbtonveränderung
3 = deutliche Erweichung / mittlere Farbtonveränderung
4 = starke Erweichung / starke Farbtonveränderung
5 = Beschichtung komplett zerstört ohne Fremdeinwirkung / sehr starke Farbtonveränderung

Probe 0: Klarlack basierend auf dem aliphatischen Polyisocayanat Desmodur N 3300 (97 Gew.-%) und Katalysator (3 Gew.-%). Das Katalysatorgemisch enthielt 0,177 g Kaliumacetat, 0,475 g 18-Krone-6 und 3,115 g Diethylenglykol. Dieses Katalysatorgemisch wurde für alle erfindungsgemäßen Beispiele verwendet.

### Beispiel 1.1: Pendelhärte

### Lackformulierungen:

Probe 1.1: Klarlack basierend auf den aminofunktionellen Harzen Desmophen NH 1450 und NH Desmophen 1520 (1:1) vernetzt mit dem aliphatischen Polyisocayanat Desmodur N 3300 mit einer Äquivalent-Ratio von 1,5
Probe 1.2: Klarlack basierend auf den aminofunktionellen Harzen Desmophen NH 1450 und Desmophen NH 1520 (1:1) vernetzt mit dem aliphatischen Polyisocayanat Desmodur N 3800 mit einer Äquivalent-Ratio von 1,5

### Applikation:

Die Lacke wurden mittels Aufziehrakel auf verschiedenen Substraten aufgezogen. Nach definierten Härtungszeit und Temperatur werden Pendelhärte, chemischen und mechanische Filmeigenschaften gemessen.

### Probe 0:

80 µm Nasslack mit Spiralrackel auf Glasplatte, Q-Panel Steel und Aluminium; Härtung für 30 Minuten bei 180° C und 7 Tage bei RT

### Proben 1.1 und 1.2:

80 µm Nasslack mit Spiralrackel auf Glasplatte, Q-Panel Steel und Aluminium; Härtung 7 Tage bei RT

**Tabelle 1: Vergleich von verschiedenen Lackformulierungen**

| | Probe 0 | Probe 1.1 | Probe 1.2 |
|---|---|---|---|
| | Desmodur N 3300 | Desmophen NH 1420 / NH 1520 Desmodur N 3300 | Desmophen NH 1420 / NH 1520 N 3800 |
| Pendelhärte (König) nach 7 Tagen | 190 s | 200 s | 55 s |
| Kratzbeständigkeit (DUR-O-Test)nach 28 d | 4 N | 1 N | <1 N |
| Abriebbeständigkeit CS 10, 1000 g Gewicht, 1000 Umdrehung | 8 mg | 50 mg | 5 mg |
| Chemische Beständigkeit nach 28 Tage bei RT | | | |
| Aceton 1min | 0 | 1 | 3 |
| Ethanol, 5 min | 0 | 1 | 2 |
| Ethanol, 50 % 30 min | 0 | 1 | 1 |
| Wasser 1h | 0 | 0 | 0 |

### Beispiel 1.2: Härtung bei Raumtemperatur

Die Probe 0 aus Beispiel 1 wurde mittels Aufziehrakel auf Glasplatten aufgezogen. Nach definierter Härtungszeit und Härtungsbedingungen ist die Pendelhärte bestimmt worden.

**Tabelle 2: Eigenschaften der Beschichtungsmaterialien in Abhängigkeit der Trocknungstemperatur**

| **Lackeigenschaften nach verschied enen Trocknungsbedingungen** 50 µm, auf Glas | | **15 min. 150°C** | **RT** |
|---|---|---|---|
| Pendelhärte (König) nach 1 d | | 195 s | klebrig |
| Pendelhärte (König) nach 7 d | | 205 s | 210 s |

### Beispiel 1.3: Chemische Beständigkeit

Der Anwendungsversuch vergleicht die erfindungsgemäße Beschichtung mit 2-Komponenten-Polyurethansystemen, die für hohe Beständigkeiten empfohlen werden.

### Lacke:

Probe 3.1: 2K wasserbasierter Polyurethanklarlack basierend auf dem Acrylat-Polyol Bayhydrol A 2695 vernetzt mit dem hydrophiliertem Polyisocyanat Bayhydur 304 mit einer Äquivalent-Ratio von 1,5
Probe 3.2: 2K wasserbasierter Polyurethanklarlack basierend auf dem Acrylat-Polyol Bayhydrol A 2695 vernetzt mit dem hydrophilierten Polyisocyanat Bayhydur 3100 mit einer Äquivalent-Ratio von 1,5

### Applikation:

Probe 0: 50 µm Nasslack mit Spiralrakel auf Makrofol; Härtung für 15 Minuten bei 180°C;

Proben 3.1 & 3.2: 70 µm Nasslack mit Spiralrakel auf Makrofol; Härtung für 30 Minuten bei 60°C und 960 min bei 60°C

Probe 0 zeigt sogar nach 10 Zyklen keine Störung im Film.

**Tabelle 3: Chemische Beständigkeit der Beschichtungsmaterialien.**

| | Anzahl Zyklen | Blue lilac | Emerald green | Jetblack | Edding rot | HS-DOT |
|---|---|---|---|---|---|---|
| | | RAL 4005 | RAL 6001 | RAL 9005 | | |
| **Probe 0** | 7 | 0 | 0 | 0 | 0 | 0 |
| **Probe 3.1** | 7 | 0 | 0 | 0 | 1 | 5 |
| **Probe 3.2** | 7 | 5 | 4 | 5 | 5 | 5 |
| **Probe 0** | 10 | 0 | 0 | 0 | 0 | 0 |

### Beispiel 2: Vergleichsversuch zur Ermittlung des Einflusses von Dibutylzinnlaurat auf die Eigenschaften der Beschichtung

Die Normtemperatur beträgt 23 °C. Alle Versuche wurden bei Normklima (NK), 23 °C und 50% relativer Feuchtigkeit durchgeführt.

Desmodur© BL 3175 SN, Desmodur© BL 4265 SN, Desmodur© BL 3272 MPA, Desmodur© BL 2078/2 SN, Desmodur PL 340 BA/SN und Desmodur© PL 350 MPA/SN sind kommerziell erhältliche Materialien der Covestro AG. Sie werden im Folgenden mit BL 3175, BL 4265, BL 3272 MPA, BL 2078/2 SN, PL 340 BA/SN und PL 350 MPA/SN abgekürzt.

Die hier verwendeten Chemikalien wurden von Sigma-Aldrich bezogen, außer anderweitig erwähnt. Handelsprodukte wurden von den entsprechenden Firmen bezogen.

Die in den Versuchen eingesetzten Mengen bzw. Mengenverhältnisse beziehen sich auf den Festkörper bzw. das Festkörperverhältnis.

### Herstellung der Katalysatorzusammensetzung

Der Katalysator 1 wurde hergestellt, indem 1,8 g 18-Krone-6 und 1,2 g Kaliumoctoat nacheinander in 57 g Methoxypropylacetat bei Raumtemperatur gelöst wurden. Der Katalysator wurde ohne weitere Aufreinigung eingesetzt.

Die Deblockierungstemperatur von blockierten Polyisocyanaten kann durch Zugabe geeigneter Katalysatoren gesenkt werden. Eine beschleunigte Deblockierung ermöglicht zwangsläufig eine schnellere Vernetzung der Polyisocyanate. In *Tabelle 4* sind die Ergebnisse der Untersuchungen zur katalytischen Deblockierung zusammengefasst: die Zugabe von DBTL in Gegenwart von Beispiel 1 führt nicht zu einem schnelleren Vernetzung, sondern verringert die Filmhärten. Dies gilt bereits für die Zugabe von 0,1 Gew.-% DBTL sowie noch deutlicher für 1,0 Gew.-% DBTL.

**Tabelle 4: Einfluss von DBTL als Kokatalysator auf die Aushärtung und Vernetzung der Polyisocyanuratsbeschichtungsmittel. Die Probentemperatur betrug 220 °C, 10 min; Ofentemperatur 250 °C.**

| Nr. | Probe | Verhältnis (BL 3175:BL 4265) | Katalysator | Menge (Gew.-%) | Pendeldämpfung nach König (s) |
|---|---|---|---|---|---|
| 1 | BL 3175 SN/BL 4265 SN | 10:0 | Kat. 1 | 0,1 | 174 |
| 2 | BL 3175 SN / BL 4265 SN | 9:1 | Kat. 1 | 0,1 | 159 |
| 3 | BL 3175 SN / BL 4265 SN | 8:2 | Kat. 1 | 0,1 | 173 |
| 4 | BL 3175 SN / BL 4265 SN | 5:5 | Kat. 1 | 0,1 | 181 |
| 5 | BL 3175 SN / BL 4265 SN | 2:8 | Kat. 1 | 0,1 | 191 |
| 6 | BL 3175 SN / BL 4265 SN | 10:0 | Kat. 1/DBTL | 0,1/0,1 | 159 |
| 7 | BL 3175 SN / BL 4265 SN | 9:1 | Kat. 1 / DBTL | 0,1/0,1 | 162 |
| 8 | BL 3175 SN / BL 4265 SN | 8:2 | Kat. 1/ DBTL | 0,1/0,1 | 140 |
| 9 | BL 3175 SN / BL 4265 SN | 5:5 | Kat. 1 / DBTL | 0,1/0,1 | 168 |
| 10 | BL 3175 SN / BL 4265 SN | 2:8 | Kat. 1 /DBTL | 0,1/0,1 | 173 |
| 11 | BL 3175 SN / BL 4265 SN | 10:0 | Kat. 1 / DBTL | 0,1/1 | 87 |
| 12 | BL 3175 SN / BL 4265 SN | 9:1 | Kat. 1/ DBTL | 0,1/1 | 135 |
| 13 | BL 3175 SN / BL 4265 SN | 8:2 | Kat. 1/ DBTL | 0,1/1 | 95 |
| 14 | BL 3175 SN / BL 4265 SN | 5:5 | Kat. 1/ DBTL | 0,1/1 | 118 |
| 15 | BL 3175 SN / BL 4265 SN | 2:8 | Kat. 1/DBTL | 0,1/1 | 164 |

## Patentansprüche

1. Verfahren zur Herstellung von Oberflächenbeschichtungen mit großer Härte und hoher mechanischer und/oder chemischer Beständigkeit umfassend die Verfahrensschritte
a) Bereitstellen einer Polyisocyanatzusammensetzung A), wobei der Isocyanatanteil mindestens 15 Gew.-% beträgt;
b) Auftragen der Polyisocyanatzusammensetzung A) auf eine Oberfläche; und
c) Katalytische Vernetzung der Polyisocyanatzusammensetzung A) in Anwesenheit eines Katalysators B)
mit der Maßgabe, dass das aus der Polyisocyanatzusammensetzung A) und dem wenigstens einen Katalysator B) gebildete Reaktionsgemisch höchstens 0,2 Gew.-% an organischen und anorganischen Eisen-, Blei-, Zinn, Bismuth- und Zinkverbindungen enthält,
und das molare Verhältnis von gegenüber Isocyanat reaktiven Gruppen zu Isocyanatgruppen im Reaktionsgemisch zu Beginn des Verfahrensschritts c) höchstens 0,3 : 1 beträgt.

2. Das Verfahren nach Anspruch 1, wobei die katalytische Vernetzung bei einer Temperatur zwischen 10 °C und 35 °C erfolgt.

3. Das Verfahren nach Anspruch 1, wobei der Katalysator ein Metallsalz einer schwachen aliphatischen oder cycloaliphatischer Carbonsäure in Kombination mit einem Kronenether ist.

4. Das Verfahren nach Anspruch 1, wobei der Katalysator ein Metallsalz einer schwachen aliphatischen oder cycloaliphatischer Carbonsäure in Kombination mit einem Kronenether ist und die katalytische Vernetzung bei einer Temperatur zwischen 10 °C und 35 °C erfolgt.

5. Das Verfahren nach einem der Ansprüche 1 bis 4, wobei die erzeugte Oberflächenbeschichtung eine Pendelhärte nach König von wenigstens 80 Sekunden aufweist.

6. Das Verfahren nach einem der Ansprüche 1 bis 4, wobei die erzeugte Oberflächenbeschichtung eine Pendelhärte nach König von wenigstens 100 Sekunden aufweist.

7. Das Verfahren nach einem der Ansprüche 1 bis 6 wobei die erzeugte Oberflächenbeschichtung eine erhöhte chemische Beständigkeit aufweist.

8. Das Verfahren nach einem der Ansprüche 1 bis 7, wobei die Beschichtung besonders beständig gegen wenigstens eines der Agentien ausgewählt aus der Gruppe bestehend aus Ethanol, Tinte, Natronlauge und HS DOT 4 ist.

9. Das Verfahren nach einem der Ansprüche 1 bis 8, wobei während der katalytischen Vernetzung in Verfahrensschritt c) die Menge der Isocyanuratgruppen in der Polyisocyanatzusammensetzung A),gegenüber der Menge, die in Verfahrensschritt a) vorlag um wenigstens 10 % zunimmt.

10. Das Verfahren nach einem der Ansprüche 1 bis 9, wobei das aus der Polyisocyanatzusammensetzung A) und dem wenigstens einen Katalysator B) gebildete Reaktionsgemisch höchstens 0,1 Gew.-% an organischen und anorganischen Eisen-, Blei-, Zinn, Bismuth- und Zinkverbindungen enthält

11. Eine Oberflächenbeschichtung erhältlich nach dem Verfahren gemäß einem der Ansprüche 1 bis 10.

12. Eine Oberfläche beschichtet mit der Oberflächenbeschichtung nach Anspruch 11.

13. Die Oberfläche gemäß Anspruch 12, wobei die Oberfläche ausgewählt ist aus der Gruppe bestehend aus mineralische Stoffen, Metall, harten Kunststoffen, flexiblen Kunststoffen, Textilien, Leder, Holz, Holzderivaten und Papier.

14. Verwendung einer Polyisocyanatzusammensetzung A, welche oligomere Polyisocyanate enthält und arm an monomeren Polyisocyanaten ist, ) in Anwesenheit von höchstens 0,5 Gew.-% an organischen und anorganischen Eisen-, Blei-, Zinn, Bismuth- und Zinkverbindungen im Reaktionsgemisch zur Herstellung von Oberflächenbeschichtungen mit hoher mechanischer und/oder chemischer Beständigkeit, wobei das molare Verhältnis von gegenüber Isocyanat reaktiven Gruppen zu Isocyanatgruppen im Reaktionsgemisch zu Beginn der katalytischen Vernetzung der Polyisocyanatzusammensetzung A höchstens 0,3 : 1 beträgt.

## Claims

1. Process for producing surface coatings having a high hardness and high mechanical and/or chemical stability, comprising the process steps of
a) providing a polyisocyanate composition A), wherein the isocyanate content is at least 15% by weight;
b) applying the polyisocyanate composition A) to a surface; and
c) catalytically crosslinking the polyisocyanate composition A) in the presence of a catalyst B),
with the proviso that the reaction mixture formed from the polyisocyanate composition A) and the at least one catalyst B) contains not more than 0.2% by weight of organic and inorganic iron, lead, tin, bismuth and zinc compounds,
and the molar ratio of isocyanate-reactive groups to isocyanate groups in the reaction mixture on commencement of process step c) is at most 0.3:1.

2. The process according to Claim 1, wherein the catalytic crosslinking is effected at a temperature between 10°C and 35°C.

3. The process according to Claim 1, wherein the catalyst is a metal salt of a weak aliphatic or cycloaliphatic carboxylic acid in combination with a crown ether.

4. The process according to Claim 1, wherein the catalyst is a metal salt of a weak aliphatic or cycloaliphatic carboxylic acid in combination with a crown ether and the catalytic crosslinking is effected at a temperature between 10°C and 35°C.

5. The process according to any of Claims 1 to 4, wherein the surface coating created has a König pendulum hardness of at least 80 seconds.

6. The process according to any of Claims 1 to 4, wherein the surface coating created has a König pendulum hardness of at least 100 seconds.

7. The process according to any of Claims 1 to 6, wherein the surface coating created has elevated chemical stability.

8. The process according to any of Claims 1 to 7, wherein the coating is particularly stable to at least one of the agents selected from the group consisting of ethanol, ink, sodium hydroxide solution and HS DOT 4.

9. The process according to any of Claims 1 to 8, wherein, during the catalytic crosslinking in process step c), the amount of the isocyanurate groups in the polyisocyanate composition A) increases by at least 10% compared to the amount that was present in process step a) .

10. The process according to any of Claims 1 to 9, wherein the reaction mixture formed from the polyisocyanate composition A) and the at least one catalyst B) contains not more than 0.1% by weight of organic and inorganic iron, lead, tin, bismuth and zinc compounds.

11. A surface coating obtainable by the process according to any of Claims 1 to 10.

12. A surface coated with a surface coating according to Claim 11.

13. The surface according to Claim 12, wherein the surface is selected from the group consisting of mineral substances, metal, rigid plastics, flexible plastics, textiles, leather, wood, wood derivatives and paper.

14. Use of a polyisocyanate composition A) which contains oligomeric polyisocyanates and is low in monomeric polyisocyanates, in the presence of at most 0.5% by weight of organic and inorganic iron, lead, tin, bismuth and zinc compounds in the reaction mixture for production of surface coatings having high mechanical and/or chemical stability, wherein the molar ratio of isocyanate-reactive groups to isocyanate groups in the reaction mixture on commencement of the catalytic crosslinking of the polyisocyanate composition A is at most 0.3:1.

## Revendications

1. Procédé pour la préparation de revêtements de surface dotés d'une grande dureté et d'une résistance mécanique et/ou chimique élevée comprenant les étapes de procédé de :
a) mise à disposition d'une composition A) de polyisocyanate, la proportion d'isocyanate étant d'au moins 15 % en poids ;
b) le dépôt de la composition A) de polyisocyanate sur une surface ; et
c) la réticulation catalytique de la composition A) de polyisocyanate en présence d'un catalyseur B)
étant entendu que le mélange de réaction formé de la composition A) de polyisocyanate et de l'au moins un catalyseur B) contient au plus 0,2 % en poids de composés organiques et inorganiques du fer, du plomb, de l'étain, du bismuth et du zinc, et le rapport molaire de groupes réactifs envers isocyanate sur les groupes isocyanate dans le mélange de réaction au début de l'étape de procédé c) est d'au plus 0,3:1.

2. Procédé selon la revendication 1, la réticulation catalytique étant réalisée à une température comprise entre 10 °C et 35 °C.

3. Procédé selon la revendication 1, le catalyseur étant un sel métallique d'un acide carboxylique faible aliphatique ou cycloaliphatique en combinaison avec un éther couronne.

4. Procédé selon la revendication 1, le catalyseur étant un sel métallique d'un acide carboxylique faible aliphatique ou cycloaliphatique en combinaison avec un éther couronne et la réticulation catalytique étant réalisée à une température comprise entre 10 °C et 35 °C.

5. Procédé selon l'une quelconque des revendications 1 à 4, le revêtement de surface produit présentant une dureté au pendule selon König d'au moins 80 secondes.

6. Procédé selon l'une quelconque des revendications 1 à 4, le revêtement de surface produit présentant une dureté au pendule selon König d'au moins 100 secondes.

7. Procédé selon l'une quelconque des revendications 1 à 6, le revêtement de surface produit présentant une résistance chimique augmentée.

8. Procédé selon l'une quelconque des revendications 1 à 7, le revêtement étant particulièrement résistant par rapport à au moins l'un des agents choisis dans le groupe constitué par l'éthanol, l'encre, la soude caustique et le HS DOT 4.

9. Procédé selon l'une quelconque des revendications 1 à 8, dans lequel pendant la réticulation catalytique dans l'étape de procédé c), la quantité de groupes isocyanurate dans la composition A) de polyisocyanate, par rapport à la quantité qui était présente dans l'étape de procédé a), augmente d'au moins 10 %.

10. Procédé selon l'une quelconque des revendications 1 à 9, le mélange de réaction formé de la composition A) de polyisocyanate et de l'au moins un catalyseur B) contenant au plus 0,1 % en poids de composés organiques et inorganiques du fer, du plomb, de l'étain, du bismuth et du zinc.

11. Revêtement de surface pouvant être obtenu par un procédé selon l'une quelconque des revendications 1 à 10.

12. Surface revêtue avec le revêtement de surface selon la revendication 11.

13. Surface selon la revendication 12, la surface étant choisie dans le groupe constitué par des matières minérales, du métal, des plastiques durs, des plastiques flexibles, des textiles, du cuir, du bois, des dérivés de bois et du papier.

14. Utilisation d'une composition A) de polyisocyanate, qui contient des polyisocyanates oligomériques et est pauvre en polyisocyanates monomériques, en présence d'au plus 0,5 % en poids de composés organiques et inorganiques du fer, du plomb, de l'étain, du bismuth et du zinc dans le mélange de réaction pour la préparation de revêtements de surface dotés d'une résistance mécanique et/ou chimique élevée, le rapport molaire de groupes réactifs envers isocyanate sur les groupes isocyanate dans le mélange de réaction au début de la réticulation catalytique de la composition A de polyisocyanate étant d'au plus 0,3:1.
